# EUROPÄISCHE PATENTSCHRIFT

(11) **EP 4 331 365 B1**
(45) Veröffentlichungstag und Bekanntmachung des Hinweises auf die Patenterteilung: **19.02.2025**
(21) Anmeldenummer: 22193572.9
(22) Anmeldetag: 01.09.2022
(51) Int. Cl.: A21C 1/02, A21C 1/14, F16P 3/12, B01F 35/60, F16P 3/14

(54) **KNETMASCHINE FÜR NAHRUNGSMITTELTEIGE MIT NOT-HALT-EINRICHTUNG UND VERFAHREN ZUR STEUERUNG EINER KNETMASCHINE FÜR NAHRUNGSMITTELTEIGE**
KNEADING MACHINE FOR FOOD DOUGHS WITH EMERGENCY-HOLDING DEVICE AND METHOD FOR CONTROLLING A KNEADING MACHINE FOR FOOD DOUGHS
MACHINE DE MALAXAGE POUR PÂTES ALIMENTAIRES AVEC DISPOSITIF D'ARRÊT D'URGENCE ET PROCÉDÉ DE COMMANDE D'UNE MACHINE DE MALAXAGE POUR PÂTES ALIMENTAIRES

(43) Veröffentlichungstag der Anmeldung: 06.03.2024
(73) Patentinhaber: DIOSNA Dierks & Söhne GmbH, 49086 Osnabrück (DE)
(72) Erfinder: BENSMANN, Stefan, 49078 Osnabrück (DE)
(74) Vertreter: Ege Lee & Roider Patentanwälte

(56) Entgegenhaltungen:
- EP-A1- 3 772 281
- DE-A1- 19 757 311
- IT-A1- 201800 011 076
- US-A- 2 846 045
- US-A- 4 919 539

## Beschreibung

Die vorliegende Erfindung betrifft eine Knetmaschine für Nahrungsmittelteige mit den Merkmalen des Oberbegriffs des Anspruchs 1 und ein Verfahren zur Steuerung einer Knetmaschine für Nahrungsmittelteige. US2846045A offenbart eine gattungsgemäße Knetmaschine gemäß dem Oberbegriff des Anspruch 1 und ein Verfahren damit.

Knetmaschinen für Teige, insbesondere Backteige, weisen einen Knetbottich unterschiedlicher Größe für Teigmassen von 100 bis 3000 Kg auf, in den jeweils ein motorisch antreibbares Knetwerkzeug zur Durchführung des Knetvorganges hineinragt. Der Knetbottich ist rotatorisch antreibbar. Er kann Teil eines Bottichwagens sein, der ermöglicht, dass der Knetbottich zwischen einzelnen Verarbeitungsstationen einfach verfahren werden kann. Es ist aber auch möglich, dass der Knetbottich fest verbaut ist.

Der Antrieb des Knetbottichs kann als Reibradantrieb oder Zahnradantrieb ausgebildet sein. Zahnradantriebe weisen eine oder zwei Einzugsstellen auf, die durch Schutzeinrichtungen gegen Zugriff gesichert sein müssen. Herkömmlicherweise wird eine als Zahnrad ausgebildete Bottichscheibe sowie das Antriebszahnrad mit einem Blech verkleidet. Der Eingriffsbereich der beiden Zahnräder ist dadurch für einen Bediener nicht erreichbar, wodurch die Gefahrenstelle abgesichert ist.

Aus hygienischen Gründen ist es jedoch wünschenswert, die Knetmaschine möglichst offen zu gestalten, damit eine Reinigung einfach möglich ist.

Es ist daher Aufgabe der vorliegenden Erfindung eine Knetmaschine anzugeben, die möglichst einfach zu reinigen ist und die bei der Bedienung ein hohes Maß an Sicherheit bietet.

Diese Aufgabe wird von einer Knetmaschine für Nahrungsmittelteige mit den Merkmalen des Anspruchs 1 und einem Verfahren zur Steuerung einer Knetmaschine für Nahrungsmittelteige mit den Merkmalen des Anspruchs 11 gelöst.

Demnach ist eine Knetmaschine für Nahrungsmittelteige aufweisend ein Knetmaschinengestell, ein Knetwerkzeug und ein das Knetwerkzeug antreibender Antrieb gehalten, ein Bottichantrieb zur Drehung eines Knetbottichs, wobei der Bottichantrieb ein Zahnradantrieb mit einem Zahnrad ist, das in Eingriff mit einer Bottichscheibe des Knetbottichs steht oder bringbar ist. Die Knetmaschine umfasst eine Not-Halt-Einrichtung, die dem Zahnrad des Bottichantriebs zugeordnet ist und die wenigstens eine Vorrichtung mit einem feststehenden Element und einem an dem feststehenden Element gelagerten beweglichen Element umfasst, wobei die wenigstens eine Vorrichtung derart ausgebildet ist, dass sie eine Einzugsstelle zwischen dem Zahnrad des Bottichantriebs und der Bottichscheibe abdeckt. Die wenigstens eine Vorrichtung weist einen Sensor auf, der dazu eingerichtet ist, eine Bewegung des beweglichen Elementes zu detektieren und mit einer Steuereinrichtung des Bottichantriebs zu kommunizieren.

Die Not-Halt-Einrichtung mit dem beweglichen Element kann eine Bewegung in Richtung der Einzugsstelle detektieren und dies dem Bottichantrieb mitteilen, so dass ein gezieltes Anhalten des Knetbottichs möglich ist. Eine vollständige Abdeckung der Bottichscheibe entfällt, wodurch der Bereich der Zahnräder einsehbar und einfach zu reinigen ist.

Bei dem Knetbottich kann es sich um einen Teil eines Bottichwagens handeln oder der Knetbottich kann fest verbaut sein.

Es ist möglich, dass die Knetmaschine ein Unterteil und ein Kopfteil aufweist, wobei das Kopfteil an dem Unterteil verschwenkbar gehalten sein kann.

Vorzugsweise umfasst die Knetmaschine ein Knetwerkzeug mit wenigstens einem Spiral- oder Wendelkneter.

Es ist denkbar, dass das bewegliche Element verschwenkbar oder drehbar an dem feststehenden Element gelagert ist. Das bewegliche Element ist vorzugsweise schwenkbar von 0-20°, bevorzugt von 0-15°, wobei der Schwenkbereich bevorzugt über Anschläge beschränkt ist. Der Sensor ist vorzugsweise Teil eines Sicherheitsschalters, der einen Schaltbereich von 2-20°, bevorzugt von 4-10° aufweist. Das bewegliche Element kann mittels Federelement rückschwenkbar ausgebildet sein. Das bewegliche Element kann beispielsweise eine Platte oder Rolle sein. Vorzugsweise ist eine Schwenk- oder Drehachse parallel zur Rotationsachse des Zahnrades des Bottichantriebs orientiert, so dass eine Bewegung in Tangentialrichtung der Bottichscheibe auf die Eingriffsstelle hin sicher detektiert werden kann. Ein Großteil des Knetmaschinengestells liegt bevorzugt frei, wobei das freiliegende Knetmaschinengestell Streben aufweist, zwischen den jeweils Freiräume gebildet sind, die von außen offen zugänglich sind und somit eine Reinigung besonders einfach machen.

Weiterhin ist eine Kneteinheit aufweisend eine zuvor genannte Knetmaschine und einen Bottichwagen mit Knetbottich oder einen fest verbauten Knetbottich vorgesehen, wobei der Knetbottich eine als Zahnrad ausgebildete Bottichscheibe aufweist, die vollumfänglich freizugänglich ausgebildet ist. Um eine Verletzungsgefahr zu minimieren, ist das Zahnrad des Bottichantriebs umfangsseitig bevorzugt vollständig abgedeckt.

Es ist vorteilhaft, wenn ein zwischen dem beweglichen Element und der Bottichscheibe gebildeter Spalt höchstens 20 mm, vorzugsweise 10 mm bis 12 mm beträgt, damit durch das bewegliche Element keine weitere Gefahrenstelle entsteht.

Der Bottichwagen ist bevorzugt an der Knetmaschine mittels einer Zangenverriegelung gehalten.

In einer bevorzugten Ausführungsform ist der Knetbottich zur Aufnahme von Nahrungsmittelteig mit Teigmassen von 100 kg bis 3000 kg ausgebildet ist.

Weiterhin ist ein Verfahren zur Steuerung einer Knetmaschine bzw. einer Kneteinheit vorgesehen, das folgende Schritte umfasst:
a. Detektieren einer Bewegung im Bereich einer Einzugsstelle zwischen dem Zahnrad des Bottichantriebs und der Bottichscheibe mittels eines Sensors, wobei die Bewegung des beweglichen Elementes einer Vorrichtung einer Not-Halt-Einrichtung detektiert wird, das die Einzugsstelle abdeckt,
b. Kommunizieren des Sensors mit einer Steuereinrichtung des Bottichantriebs und Stoppen der Drehbewegung des Knetbottichs,
c. Erneutes Starten der Rotation des Knetbottichs durch Benutzereingabe.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:
- Figur 1:: eine räumliche Darstellung einer Knetmaschine mit offenem Konzept,
- Figur 2:: eine Detailansicht des Bottichwagens der Knetmaschine der Figur 1,
- Figur 3:: eine Draufsicht auf einen Zahnradantrieb des Bottichwagens, sowie
- Figur 4:: eine räumliche Ansicht eines Teils der Knetmaschine ohne Bottichwagen.

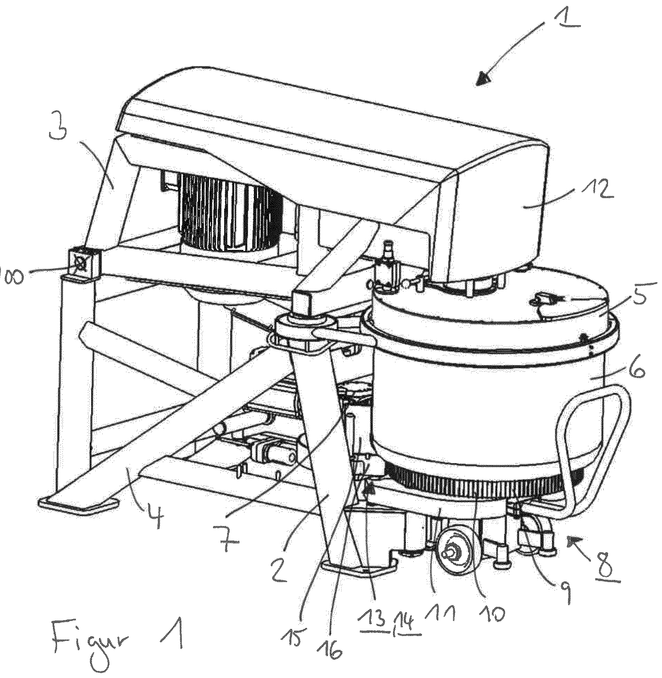

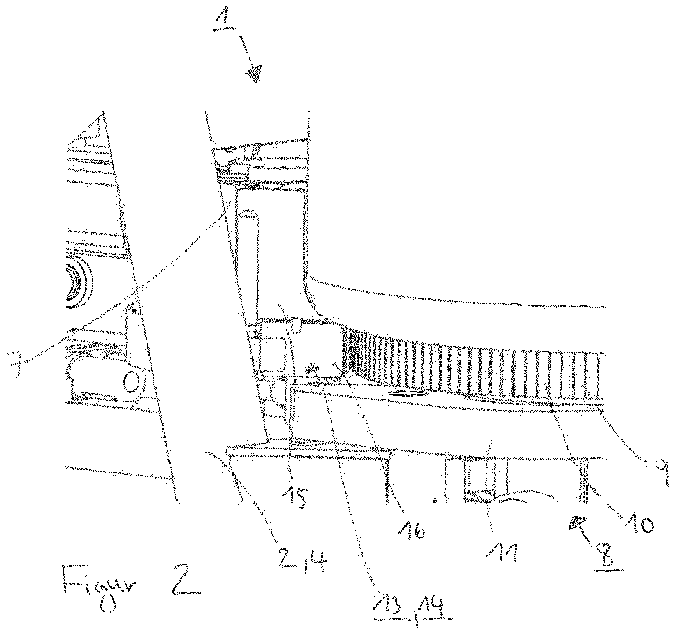

Die in den Figuren 1 und 2 dargestellte Knetmaschine 1 ist zur Verarbeitung eines Nahrungsmittelteigs, insbesondere eines Backteigs ausgebildet. Die Knetmaschine 1 weist ein Knetmaschinengestell 2 auf, dessen Kopfteil 3 um eine Schwenkachse 100 zwischen gegenüber einem Unterteil 4 verschwenkbar ist. Das Kopfteil 3 trägt das Knetwerkzeug, nicht dargestellt, und den für eine Rotation des Knetwerkzeugs benötigten Antrieb, sowie einen Deckel 5, der zum Abdecken des nach oben hin offenen Knetbottichs 6 vorgesehen ist. Im Unterteil 4 der Knetmaschine 1 ist ein Bottichantrieb 7 angeordnet. Der Bottichantrieb 7 dreht den Knetbottich 6 um eine nicht dargestellte Rotationsachse gegenüber dem Knetmaschinengestell 2. Der Knetbottich 6 ist Teil eines Bottichwagens 8. Er ist mit einer nicht dargestellten Welle verbunden. Auf der Welle sitzt unterhalb des Knetbottichs 6 eine Bottichscheibe 9, die mit der Welle drehfest verbunden ist und die als Zahnrad mit einer umlaufenden Verzahnung 10 ausgebildet ist. Die Bottichscheibe 9 ist mit einem nicht dargestellten Zahnrad des Bottichantriebs 7 der Knetmaschine 1 zum Drehen des Knetbottichs 6 in Wirkverbindung bringbar. Unterhalb der Bottichscheibe 9 ist die Welle von einer nicht dargestellten Nabenscheibe konzentrisch umgeben, die mit einem Untergestell des Bottichwagens 8 verbunden ist und somit ortsfest gehalten ist. Bei Rotation des Knetbottichs 6 dreht sich die Nabenscheibe nicht mit. An der Nabenscheibe greift eine Zangenverriegelung 11 der Knetmaschine 1 an, um den Knetbottich 6 in Position zu halten.

Die Knetmaschine 1 weist ein aus Edelstahlblechen gebildetes Gehäuse 12 auf. Das Gehäuse 12 deckt nur den Antrieb des Knetwerkzeugs ab. Es ist auch denkbar eine Kunststoffhaube zu verwenden. Das Knetmaschinengestell 2 an sich ist offengelegt und offen zugänglich. Es ist von dem Gehäuse 12 nicht umgeben.

Die Knetmaschine 1 umfasst eine Vorrichtung 13 einer Not-Halt-Einrichtung 14. Die Bottichscheibe 9 und das Zahnrad des Bottichantriebs 7 kämmen ineinander (nicht dargestellt) und drehen sich gegenläufig. In dem Bereich in dem die Zähne der beiden Zahnräder aufeinander zulaufen, bildet sich im Betrieb eine Einzugsstelle aus. Wenn die Knetmaschine 1 dazu eingerichtet ist, dass der Knetbottich 6 sich in eine einzige Richtung um die Rotationsachse dreht, bildet sich eine einzige Einzugsstelle aus. Ist jedoch vorgesehen, dass der Knetbottich 6 sich in beide Richtungen drehen kann, kann die Einzugsstelle auf der einen Seite des Eingriffsbereichs oder der anderen Seite liegen und beide Seiten müssen geschützt werden. Die Vorrichtung 13 der Not-Halt-Einrichtung 14 deckt den Eingriffsbereich in Radialrichtung nach außen hin ab und schützt so vor unmittelbaren Eingriff in den Eingriffsbereich der beiden Zahnräder. Die Vorrichtung 13 weist ein feststehendes Element 15 und ein bewegliches Element 16 auf. Das bewegliche Element 15 ist an dem feststehenden Element 16 schwenkbar um eine Schwenkachse gelagert. Die Schwenkachse verläuft parallel zur Rotationsachse des Knetbottichs 6. Das bewegliche Element 16 ist derart dimensioniert, dass es im Betrieb der Knetmaschine 1 einen Spalt mit der Bottichscheibe 9 ausbildet, der kleiner als 20 mm ist. Die Vorrichtung umfasst ferner einen Sensor, der eine Bewegung des beweglichen Elements 16 detektiert. Der Bottichantrieb 7 weist eine Steuereinrichtung auf. Der Sensor kommuniziert mit der Steuereinrichtung.

Für den Fall, dass ein Bediener an der Bottichscheibe 9 hängen bleibt oder in den Eingriffsbereich der beiden Zahnräder eingreift und von der Bottichscheibe bei der Drehbewegung mitgenommen wird, stößt der Bediener bzw. ein von der Bottichscheibe mitgenommener Gegenstand gegen das bewegliche Element 16, welches dadurch um die Schwenkachse in Richtung des Eingriffsbereichs der beiden Zahnräder verschwenkt wird. Die Bewegung des beweglichen Elementes 16 wird von dem Sensor detektiert und der Sensor schickt ein entsprechendes Signal an die Steuereinrichtung des Bottichantriebs 7 und die Steuereinrichtung führt einen Not-Halt des Bottichantriebs 7 aus. Der Knetbottich kommt zum Stehen, so dass verhindert werden kann, dass der Bediener oder die Maschine verunfallt bzw. Schaden nimmt. Um wieder in den Normalbetrieb übergehen zu können, ist vorgesehen, dass der Bediener der Knetmaschine einen Befehl geben kann, der den Bottichantrieb 7 wieder in einen Normalbetriebszustand versetzt.

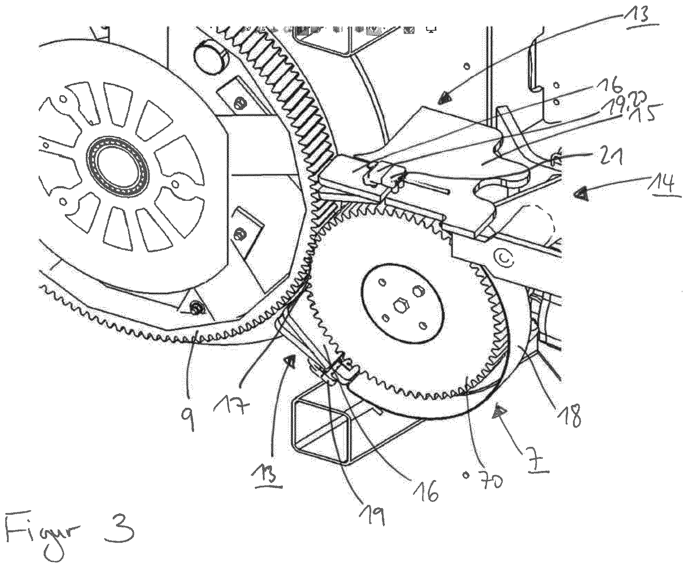

Figur 3 zeigt im Detail in Draufsicht von unten den Eingriffsbereich 17 der beiden Zahnräder 9, 70 und die Not-Halt-Einrichtung 14. Die Not-Halt-Einrichtung 14 besteht aus zwei Vorrichtungen 13, die jeweils ein feststehendes Element 15 und ein bewegliches Element 16 aufweisen. Die beiden Vorrichtungen 13 sind an der Knetmaschine befestigt. Sie decken das Zahnrad 70 des Bottichantriebs 7 in Radialrichtung nach außen ab. Das Zahnrad 70 ist um mindestens 250° umfangsseitig abgedeckt. Der einzige freie Bereich ist der des Eingriffs mit der Bottichscheibe 9 und der von den beweglichen Elementen 16 abgedeckte Bereich. Das bewegliche Element 16 überragt jeweils in Radialrichtung das Zahnrad 70 des Bottichantriebs 7. In Figur 3 ist der Zustand mit eingeschobenem Bottichwagen dargestellt. Die beiden Zahnräder 9, 70 kämmen ineinander. In diesem Zustand ist das Zahnrad 70 des Bottichantriebs 7 vollständig in Radialrichtung gegen Zugriff gesichert. Die Bottichscheibe 9 hingegen ist bis auf den durch die beiden beweglichen Elemente 16 definierten Bereich frei zugänglich.

Es ist möglich die beiden feststehenden Elemente 15 einstückig und damit durchgehend auszubilden, oder diese, wie in Figur 3 dargestellt, mit einem Zwischenelement 18 zu verbinden. Da das Zwischenelement 18 im Inneren der Knetmaschine liegt, muss dieses sich lediglich über die Höhe des Zahnrades 70 des Bottichantriebs 7 erstrecken. Das feststehende Element 15 weist im Bereich der Anbindung zum beweglichen Elementen 16 hin hingegen eine deutlich größere Höhe auf, um einen unbefugten Eingriff in den Bottichantrieb 7 von oben zu verhindern. Das bewegliche Element 16 hingegen erstreckt sich ebenfalls nur über die Höhe des Zahnrades 70 des Bottichantriebs 7. Das bewegliche Element 16 ist zwischen zwei nicht dargestellten Anschlägen verschwenkbar. Die Anschläge definieren die Bewegung und begrenzen diese, damit die Knetmaschine und die Vorrichtung keinen Schaden nehmen. Der Sensor ist bevorzugt ein magnetischer Nährungssensor. Er kann aber auch beispielsweise als Drehwinkelsensor ausgebildet sein. Der Sensor ist Teil eines Sicherheitsschalters mit für den Einsatzzweck zum Personenschutz entsprechendem Performancelevel. Der hier dargestellte magnetische Nährungssensor 19 weist einen ersten Teil 20 auf, der an dem beweglichen Element 16 befestigt ist und einen zweiten Teil 21, der ortsfest an der Knetmaschine, insbesondere an dem feststehenden Element 15 gehalten ist. Der Sensor 19 detektiert eine Relativbewegung zwischen den beiden Teilen 20,21.

In Figur 3 ist der Normalbetriebszustand des beweglichen Elements 16 und ein den Not-Halt auslösender Zustand dargestellt.

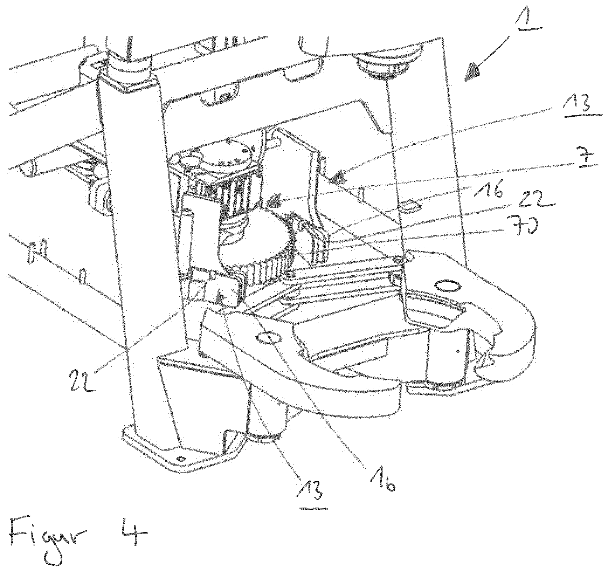

Figur 4 zeigt ein Teil der Knetmaschine 1 ohne Bottichwagen. Das Zahnrad 70 des Bottichantriebs 7 ist bereichsweise zugänglich und kann so einfach gereinigt werden. Da zwischen den beiden Vorrichtungen 13 und dem Zahnrad 70 ebenfalls Raum ist, kann auch hier eine Reinigung einfach erfolgen. Figur 4 zeigt ebenfalls den Normalbetriebszustand des beweglichen Elements 16 und ein den Not-Halt auslösenden Zustand. Weiterhin sind die Anschläge 22, die die Bewegung begrenzen dargestellt.

## Patentansprüche

1. Knetmaschine (1) für Nahrungsmittelteige aufweisend ein Knetmaschinengestell (2), ein Knetwerkzeug, einen das Knetwerkzeug antreibenden Antrieb und einen Bottichantrieb (7) zur Drehung eines Knetbottichs (6), wobei der Bottichantrieb (7) ein Zahnradantrieb mit einem Zahnrad (70) ist, das in Eingriff mit einer Bottichscheibe (9) des Knetbottichs (6) steht oder bringbar ist, **dadurch gekennzeichnet, dass** die Knetmaschine (1) eine Not-Halt-Einrichtung (14) umfasst, die dem Zahnrad (70) des Bottichantriebs (7) zugeordnet ist und die wenigstens eine Vorrichtung (13) mit einem feststehenden Element (15) und einem an dem feststehenden Element (15) gelagerten beweglichen Element (16) umfasst, wobei die wenigstens eine Vorrichtung (13) derart ausgebildet ist, dass sie eine Einzugsstelle zwischen dem Zahnrad (70) des Bottichantriebs (7) und der Bottichscheibe (9) abdeckt und wobei die wenigstens eine Vorrichtung (13) einen Sensor (19) aufweist, der dazu eingerichtet ist, eine Bewegung des beweglichen Elementes (16) zu detektieren und mit einer Steuereinrichtung des Bottichantriebs (7) zu kommunizieren.

2. Knetmaschine nach Anspruch 1, **dadurch gekennzeichnet, dass** die Knetmaschine (1) ein Knetwerkzeug mit wenigstens einem Spiral- oder Wendelkneter umfasst.

3. Knetmaschine nach Anspruch 1 oder 2, **dadurch gekennzeichnet, dass** das bewegliche Element (16) verschwenkbar oder drehbar an dem feststehenden Element (15) gelagert ist.

4. Knetmaschine nach Anspruch 2, **dadurch gekennzeichnet, dass** eine Schwenk- oder Drehachse parallel zur Rotationsachse des Zahnrades (7) des Bottichantriebs (70) orientiert ist.

5. Knetmaschine nach einem der vorhergehenden Ansprüche, **dadurch gekennzeichnet, dass** ein Großteil des Knetmaschinengestells (2) frei liegt, wobei das freiliegende Knetmaschinengestell Streben (4) aufweist, zwischen den jeweils Freiräume gebildet sind, die von außen offen zugänglich sind.

6. Kneteinheit aufweisend eine Knetmaschine (1) nach einem der vorhergehenden Ansprüche 1 bis 5 und einen Bottichwagen (8), wobei der Bottichwagen (8) eine als Zahnrad ausgebildete Bottichscheibe (9) aufweist, die vollumfänglich freizugänglich ausgebildet ist.

7. Kneteinheit aufweisend eine Knetmaschine (1) nach einem der vorhergehenden Ansprüche 1 bis 5 und einen nicht entnehmbaren Knetbottich, wobei der Knetbottich eine als Zahnrad ausgebildete Bottichscheibe aufweist, die vollumfänglich freizugänglich ausgebildet ist.

8. Kneteinheit nach Anspruch 6 oder 7, **dadurch gekennzeichnet, dass** das Zahnrad (70) des Bottichantriebs (7) umfangsseitig vollständig abgedeckt ist.

9. Kneteinheit nach einem der Ansprüche 6 bis 8, **dadurch gekennzeichnet, dass** ein zwischen dem beweglichen Element (16) und der Bottichscheibe (9) gebildeter Spalt höchstens 20 mm beträgt.

10. Kneteinheit nach einem der Ansprüche 6 bis 9, **dadurch gekennzeichnet, dass** der Knetbottich (6) zur Aufnahme von Nahrungsmittelteig mit Teigmassen von 100 bis 3000 kg ausgebildet ist.

11. Verfahren zur Steuerung einer Knetmaschine (1) für Nahrungsmittelteige aufweisend ein Knetmaschinengestell (2), ein Knetwerkzeug (5), einen das Knetwerkzeug (5) antreibenden Antrieb und einen Bottichantrieb (7) zur Drehung eines Knetbottichs (6), wobei der Bottichantrieb (7) ein Zahnradantrieb mit einem Zahnrad (70) ist, das in Eingriff mit einer Bottichscheibe (9) des Knetbottichs (6) steht oder bringbar ist, **dadurch gekennzeichnet, dass** das Verfahren die folgende Schritte umfasst:
a. Detektieren einer Bewegung im Bereich einer Einzugsstelle zwischen dem Zahnrad (70) des Bottichantriebs (7) und der Bottichscheibe (9) mittels eines Sensors (19), wobei die Bewegung eines beweglichen Elementes (16) einer Vorrichtung (13) einer Not-Halt-Einrichtung (14) detektiert wird, das die Einzugsstelle abdeckt,
b. Kommunizieren des Sensors (19) mit einer Steuereinrichtung des Bottichantriebs (7) und Stoppen der Drehbewegung des Knetbottichs (6),
c. Erneutes Starten der Rotation des Knetbottichs (6) durch Benutzereingabe.

## Claims

1. Kneading machine (1) for food doughs, comprising a kneading machine frame (2), a kneading tool, a drive that drives the kneading tool and a vat drive (7) for rotating a kneading vat (6), wherein the vat drive (7) is a gear drive with a gear (70) that is or can be brought into engagement with a vat disk (9) of the kneading vat (6), **characterized in that** the kneading machine (1) comprises an emergency stop device (14) that is assigned to the gear (70) of the vat drive (7) and that comprises at least one device (13) with a fixed element (15) and a movable element (16) mounted on the fixed element (15), wherein the at least one device (13) is designed such that it covers a feed point between the gear wheel (70) of the vat drive (7) and the vat disk (9), and wherein the at least one device (13) has a sensor (19) which is designed to detect a movement of the movable element (16) and to communicate with a control device of the vat drive (7).

2. Kneading machine according to claim 1, **characterized in that** the kneading machine (1) comprises a kneading tool with at least one spiral or helical kneader.

3. Kneading machine according to claim 1 or 2, **characterized in that** the movable element (16) is pivotably or rotatably mounted on the fixed element (15).

4. Kneading machine according to claim 2, **characterized in that** a pivoting or rotation axis is oriented parallel to the rotation axis of the gear wheel (70) of the vat drive (7).

5. Kneading machine according to one of the preceding claims, **characterized in that** a large part of the kneading machine frame (2) is exposed, wherein the exposed kneading machine frame has struts (4) between which free spaces are formed which are openly accessible from the outside.

6. Kneading unit comprising a kneading machine (1) according to one of the preceding claims 1 to 5 and a vat carriage (8), wherein the vat carriage (8) has a vat disk (9) designed as a gear wheel, which is designed to be freely accessible over its entire circumference.

7. Kneading unit comprising a kneading machine (1) according to one of the preceding claims 1 to 5 and a non-removable kneading vat, wherein the kneading vat has a vat disk designed as a gear wheel, which is designed to be freely accessible over its entire circumference.

8. Kneading unit according to claim 6 or 7, **characterized in that** the gear wheel (70) of the vat drive (7) is completely covered on the circumference.

9. Kneading unit according to one of claims 6 to 8, **characterized in that** a gap formed between the movable element (16) and the vat disc (9) is at most 20 mm.

10. Kneading unit according to one of claims 6 to 9, **characterized in that** the kneading vat (6) is designed to accommodate food dough with dough masses of 100 to 3000 kg.

11. Method for controlling a kneading machine (1) for food doughs, comprising a kneading machine frame (2), a kneading tool (5), a drive that drives the kneading tool (5), a vat drive (7) for rotating a kneading vat (6), wherein the vat drive (7) is a gear drive with a gear (70) which is or can be brought into engagement with a vat disk (9) of the kneading vat (6), **characterized in that** the method comprises the following steps:
a. detecting a movement in the region of a feed point between the gear wheel (70) of the vat drive (7) and the vat disc (9) by means of a sensor (19), wherein the movement of a movable element (16) of a device (13) of an emergency stop device (14) is detected, which covers the feed point,
b. communicating the sensor (19) with a control device of the vat drive (7) and stopping the rotational movement of the kneading vat (6),
c. restarting the rotation of the kneading vat (6) by user input.

## Revendications

1. Machine à pétrir (1) pour pâtes alimentaires, comprenant un bâti de machine à pétrir (2), un outil de pétrissage, un entraînement entraînant l'outil de pétrissage et un entraînement de cuve (7) est fixé pour faire tourner un cuve de pétrissage (6), le l'entraînement de cuve (7) est un entraînement par engrenages avec un engrenage (70) qui est ou peut être amené en prise avec un disque de cuve (9) de la cuve de pétrissage (6), **caractérisé en ce que** la machine à pétrir (1) présente un dispositif d'arrêt d'urgence (14), qui est associé à l'engrenage (70) de l'entraînement de la cuve (7) et au moins un dispositif (13) avec un élément fixe (15) et un sur l'élément fixe (15) un élément mobile (16) monté, dans lequel le au moins un dispositif (13) est conçu de telle sorte qu'il recouvre un point d'alimentation entre l'engrenage (70) de l'entraînement de la cuve (7) et le disque de la cuve (9) et dans lequel le au moins un dispositif (13) comporte un capteur (19) qui est configuré pour détecter un mouvement de l'élément mobile (16) et avec un dispositif de commande de l'entraînement de la cuve (7) communiquer.

2. Machine à pétrir selon la revendication 1, **caractérisée en ce que** la machine à pétrir (1) comprend un outil de pétrissage avec au moins une spirale ou un pétrin à spirale.

3. Machine à pétrir selon la revendication 1 ou 2, **caractérisé en ce que** l'élément mobile (16) est monté pivotant ou rotatif sur l'élément fixe (15).

4. Machine à pétrir selon la revendication 2, **caractérisé en ce qu'**un axe de pivotement ou de rotation est orienté parallèlement à l'axe de rotation de l'engrenage (7) de l'entraînement de la cuve (70)..

5. Machine à pétrir selon l'une des revendications précédentes, **caractérisé en ce qu'**une grande partie du châssis du pétrin (2) est apparente, le châssis apparent du pétrin comportant des entretoises (4), entre lesquelles sont formés des espaces libres, qui sont ouvertement accessibles depuis l'extérieur.

6. Unité de pétrissage comprenant une machine à pétrir (1) selon l'une des revendications précédentes 1 à 5 et un chariot à cuve (8), le chariot à cuve (8) présentant un disque de cuve (9) conçu comme engrenage, qui est conçu pour être en accès totalement libre.

7. Unité de pétrissage comprenant une machine à pétrir (1) selon l'une des revendications précédentes 1 à 5 et une cuve de pétrissage non amovible, la cuve de pétrissage présentant un disque de cuve conçu comme un engrenage, qui est conçu pour être entièrement accessible.

8. Unité de pétrissage selon la revendication 6 ou 7, **caractérisée en ce que** l'engrenage (70) de l'entraînement de la cuve (7) est entièrement recouvert sur la circonférence.

9. Unité de pétrissage selon l'une des revendications 6 à 8, **caractérisée en ce qu'**un espace formé entre l'élément mobile (16) et le disque de cuve (9) est d'au plus 20 mm.

10. Unité de pétrissage selon l'une des revendications 6 à 9, **caractérisée en ce que** la cuve de pétrissage (6) est conçue pour contenir de la pâte alimentaire avec des masses de pâte de 100 à 3 000 kg.

11. Procédé de commande d'une machine à pétrir (1) pour pâte alimentaire, comprenant un bâti de machine à pétrir (2), un outil de pétrissage (5), un entraînement entraînant l'outil de pétrissage (5) et un entraînement de cuve (7) est fixé pour faire tourner un cuve de pétrissage (6), le l'entraînement de cuve (7) est un entraînement par engrenages avec un engrenage (70) qui est ou peut être amené en prise avec un disque de cuve (9) de la cuve de pétrissage (6), **caractérisé en ce que** le procédé comprend les étapes suivantes:
a. détection d'un mouvement dans la zone d'un point d'alimentation entre l'engrenage (70) de l'entraînement de la cuve (7) et le disque de la cuve (9) au moyen d'un capteur (19), le mouvement d'un élément mobile (16) on détecte un dispositif (13) d'un dispositif d'arrêt d'urgence (14) qui recouvre le point d'alimentation,
b. communiquer le capteur (19) avec un dispositif de commande de l'entraînement de la cuve (7) et arrêter le mouvement de rotation de la cuve de pétrissage (6),
c. redémarrage de la rotation de la cuve de pétrissage (6) via une entrée utilisateur.
